Europäisches Patentamt

European Patent Office

Office européen des brevets

(11) Publication number: **0 276 909 B1**

## EUROPEAN PATENT SPECIFICATION

(45) Date of publication of patent specification: **07.04.93**

(51) Int. Cl.5: **G01S 11/00**

(21) Application number: **88300093.7**

(22) Date of filing: **07.01.88**

(54) Photocell distance measurement method and apparatus.

(30) Priority: **07.01.87 US 1205**

(43) Date of publication of application:
**03.08.88 Bulletin 88/31**

(45) Publication of the grant of the patent:
**07.04.93 Bulletin 93/14**

(84) Designated Contracting States:
**DE FR GB**

(56) References cited:
**US-A- 3 744 906**

**PATENT ABSTRACTS OF JAPAN, vol. 7, no. 60 (P-182)[1205], 12th March 1983; & JP-A-57 206 803 (NIPPON DENKI K.K.) 18.12.1982**

**PATENT ABSTRACTS OF JAPAN, vol. 9, nr. 79 (P-347)[1802], 9th April 1985; & JP-A-59 211 807 (NAIRUSU BUHIN K.K.) 30.11.1984**

(73) Proprietor: **MANAGEMENT GRAPHICS, INC.**
**1401 E. 79th Street**
**Bloomington Minnesota 55420(US)**

(72) Inventor: **Glass, William H.**
**5721 York Avenue South**
**Edina Minnesota 55410(US)**

(74) Representative: **Harrison, David Christopher et al**
**MEWBURN ELLIS 2 Cursitor Street**
**London EC4A 1BO (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to optical distance measurement apparatus and methods, and in particular, an optical distance measurement apparatus and method applied to CRT imaging displays as is used in film recorders.

CRT imaging displays measure the light output of the CRT with a photodetector. The photodetector signal is used to calibrate the brightness of the display and to adjust for aging of the CRT, temperature change and drift of operating voltages. One difficulty of this technique is that the readings from the photodetector are fairly sensitive to the distance (inversely to the square of the distance) between the detector and the phosphor of the CRT. The problem is encountered if it becomes necessary to replace the detector, the CRT, any of the mounting components, or if disassembly of the mechanical structure is required for service or maintenance.

In the past, this problem has been dealt with by using very precise mechanical mounting that ensured repeatability of positions, or by mounting the photocell a considerable distance (several inches) from the CRT so that minor positioning errors are not significant. The first solution is expensive, and the second reduces the illumination on the detector and requires a more sensitive measuring device. The technique described here avoids both of these problems.

The invention is an apparatus (claim 1) or a method (claim 8) which detects light intensities from any two patterns of a point a line and an area of equal luminance displayed on a surface, and calculates the distance between the detector and surface as a function of the ratio of the intensity of light from the two patterns, according to formulae which depend on the pair of patterns utilized.

The present invention may be incorporated into an image recorder described in EP-A-274447.

One embodiment of the invention will now be described with reference to the drawing, wherein:

Fig. 1 is a geometrical illustration of the relationship of the CRT imaging display and the photodetector, including a single point illumination thereon;

Fig. 2 is an illustration of a single line on the CRT image display of Fig. 1; and

Fig. 3 is an illustration of the illumination of an area on the X-Y plane of the CRT of Fig. 1.

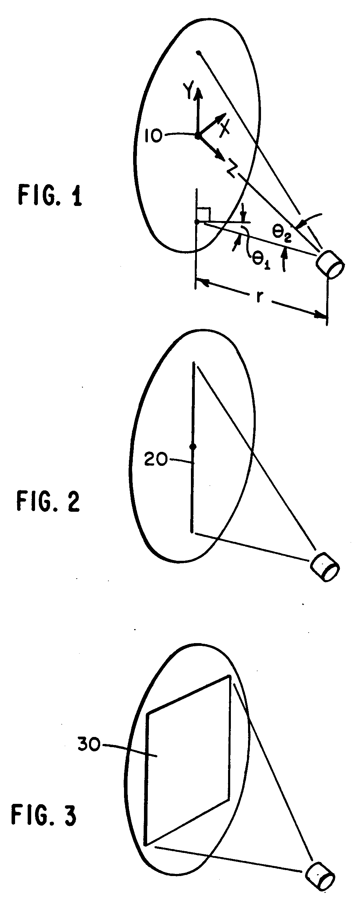

A coordinate system is shown in Fig. 1. The X and Y axes are parallel to the surface of the CRT phosphor 11 which is located at $Z = 0$. The photodetector 12 is centered above the origin at an unknown distance Z above the phosphor. Next, using Lambert's cosine law of emission, we define L as the uniform luminescence of the phosphor, $ds_1$ as an element of the phosphor surface, $ds_2$ as an element of the detector, r is the distance between the two elements, and $\theta_1$ and $\theta_2$ are the angles between the elements and the line connecting them (see Fig. 2). From this, the illumination of $ds_2$ is given by:

$$d E = \frac{L \, ds_1 \, \cos \theta_1 \, \cos \theta_2}{r^2} \qquad (1)$$

If the photodetector is parallel to the surface of the phosphor, then $\theta_1 = \theta_2$, and this value will be called $\theta$.

From this equation, we can see that if we illuminate only the single point 10, Fig. 1, at the origin, then the illumination at the photodetector is proportional to:

$$\frac{L}{Z^2} \qquad (2)$$

Next, if we illuminate a single line 20, Fig. 2, at $Y = 0$, we can calculate the illumination at the photodetector as proportional to:

2

$$\frac{\pi \; L}{2Z} \tag{3}$$

Finally, if we illuminate the entire X-Y plane, 30 Fig. 3, we can calculate the illumination at the photodetector as proportional to:

$$\pi L \tag{4}$$

In reality, it is impossible to illuminate a single point, line, or the entire X-Y plane. The limitation of the dot size of the CRT and the physical limits on the CRT size prevent this. However, we may make some reasonable approximations.

For example, instead of illuminating a single point, assume that a small rectangular area of dimensions $X_1$ by $Y_1$ centered at the origin is used. Evaluating equation (1) shows that the intensity at the detector is approximately:

$$\frac{L \; X_1 \; Y_1}{Z^2} \; = \; R_1 \tag{5}$$

and the error in this approximation is less than

$$1/2 \; \left( \frac{X_1{}^2 + Y_1{}^2}{Z^2} \right) \tag{6}$$

Similarly, instead of illuminating a line, assume that a long rectangular area of dimension $X_2$ by $Y_2$ centered at the origin is used ($X_2$ is much greater than $Y_2$). Evaluating equation (1) shows that the intensity at the detector is approximately:

$$\frac{\pi \; L \; Y_2}{2Z} \; = \; R_2 \tag{7}$$

and the error in the approximation is less than

$$1/2 \; \left( \frac{Y_2}{Z} \right)^2 \; + \; \frac{8}{3 \pi} \left( \frac{Z}{X_2} \right)^2 \tag{8}$$

3

Finally, instead of illuminating the entire X-Y plane, assume that a large rectangular area of dimension $X_3$ by $Y_3$ centered at the origin is used. Evaluating equation (1) shows that the intensity at the detector is approximately:

$$\pi L = R_3 \qquad (9)$$

and the error in the approximation is less than

$$\frac{8}{3 \pi} \left( \frac{z^2}{X_3^2} + \frac{z^2}{Y_3^2} \right) \qquad (10)$$

Thus it can be seen that if some advance knowledge is available on the expected range of values of Z and an acceptable error in the measurement is chosen, then one can easily choose sizes of the patterns to be drawn on the CRT. For example, if an accuracy of one percent is desired when Z is between $Z_{min}$ and $Z_{max}$, then one could choose:

$$X_1 \text{ and } Y_1 < \frac{Z_{min}}{10} \qquad (11)$$

$$X_2 > 10 \, Z_{max} \qquad (12)$$

$$Y_2 < \frac{Z_{min}}{50} \qquad (13)$$

$$X_3 \text{ and } Y_3 > 14 \, Z_{max} \qquad (14)$$

It is now easy to calculate Z by means of any of the following equations:

$$\frac{R_2}{R_1} = \frac{\pi \, Y_2 \, Z}{2 \, X_1 \, Y_1} \propto Z \qquad (15)$$

$$\frac{R_3}{R_2} = \frac{2Z}{Y_2} \propto Z \qquad (16)$$

$$\frac{R_3}{R_1} = \frac{\pi \, z^2}{X_1 \, Y_1} \propto z^2 \qquad (17)$$

4

From the above, it is easily seen that if one performs any two of the three measurements, one can obtain the value of Z. This value is not in any particular physical units (e.g., inches). The conversion factor to physical units is not easily calculated since it depends on the sensitivity of the detector as a function of and on how closely the phosphor resembles a uniformly diffusing surface. This conversion factor is seldom needed, but if it is necessary, it may be determined by once taking measurements on a setup with a known value of Z.

Other errors in the measurements result if the CRT phosphor does not approximate a uniformly diffusing surface, or if the sensitivity of the photodetector varies significantly with the angle of light source. If such errors are significant, then one may create a setup for measuring the ratio of the two selected patterns at various measured distances (values of Z). Then reading from an unknown system may then be looked up in this table to determine the correct value. This technique is also useful if limitations on the CRT size prevent drawing the long lengths necessary for the line and plane patterns.

Moreover, this technique may also be used for measuring the thickness of the CRT faceplate on an assembled CRT. This value is important for film recorders since the glass causes the apparent position of the phosphor to be closer to the camera lens that it really is (by approximately one third the thickness of the glass). Thus the variability in faceplate thickness which require adjustments in lens focus and/or camera positioning are determined according to the process of the present invention.

## Claims

1. A distance measuring apparatus comprising:

means (11) for selectively displaying a first (10,20,30) and second (10,20,30) light pattern, wherein said first light pattern and second light pattern are a different two of a point (10), line (20), and an area (30) each having an equal luminance and constant size;

a detector (12) spaced apart from said means (11) and providing two intensity signals in response to received incident light from said means (11), each of said two intensity signals corresponding to a selected light pattern; and

means for calculating a measure, indicative of the distance between the said means (11) and said detector (12) according to the ratio of said intensity signals.

2. A distance measurement apparatus according to claim 1, wherein the detector (12) is positioned along an axis normal to the means (11) which axis passes through a point at which the radiation patterns (10,20) are centred, said first light pattern approximating a point source (10) of zero dimension, said second light pattern approximating a line source (20) of one dimension, and said means for calculating provides the measure Z according to the equation:

$$\frac{R_2}{R_1} = \frac{\pi Y_2 Z}{2 X_1 Y_1} \propto Z$$

wherein $X_1$, $Y_1$ are the dimensions of the point (10), $Y_2$ is the smaller dimension of the line (20),

$$R_1 = \frac{L X_1 Y_1}{Z^2}$$

and

$$R_2 = \frac{\pi \, L \, Y_2}{2Z}$$

and L is the uniform luminescence of the said means (11).

3. A distance measurement apparatus according to claim 1, wherein the detector (12) is positioned along an axis normal to the means (11) which axis passes through a point at which the light patterns (20,30) are centred, said first light pattern approximating a line source (20) of one dimension, and said second light pattern approximating an area source (30) of two dimensions, and said means for calculating provides the measure Z according to the equation:

$$\frac{R_3}{R_2} = \frac{2Z}{Y_2} \qquad \propto Z$$

wherein $Y_2$ is the small dimension of the line (10),

$$R_2 = \frac{\pi \, L \, Y_2}{2Z}$$

$R_3 = \pi \, L$, and L is the uniform luminescence of the said means (11).

4. A distance measurement apparatus according to claim 1, wherein the detector (12) is positioned along an axis normal to the means (11) which axis passes through a point at which the light patterns (10,30) are centred, said first light pattern approximating a point source (10) of zero dimension, and said second light pattern approximating an area source (30) of two dimensions, and said means for calculating provides the measure Z according to the equation:

$$\frac{R_3}{R_1} = \frac{\pi \, Z^2}{X_1 \, Y_1} \qquad \propto Z^2$$

where $X_1$, $Y_1$ are the dimensions of the point (10)

$$R_1 = \frac{L \, X_1 \, Y_1}{Z^2},$$

$R_3 = \pi \, L$, and L is the luminescence of the said means (11).

6

5. The distance measurement apparatus of any one of the preceding claims, wherein said light is one of infrared, visible or ultraviolet light.

6. The distance measurement apparatus of any one of the preceding claims, wherein said means (11) comprises a CRT display system.

7. The distance measurement apparatus of any one of the preceding claims, wherein said means for calculating includes means for compensating for angular displacement of said detector (12) and said means (11), and said means for compensating operating in accordance with the equation:

$$dE = \frac{L \; ds_1 \; \cos \; \theta_1, \; \cos \; \theta_2}{r2}$$

wherein L is the luminescence of the means (11) displaying the light patterns, $ds_1$ is an element of the display surface, r is the distance between the detector (12) and the means (11) and $\theta_1$ and $\theta_2$ are the angles between the detector (12) and the means (11) and a line joining them.

8. A method of measuring the distance between a light pattern on a surface (11) and a point location (12) spaced apart from the pattern, comprising the steps of:
    displaying a first and second light pattern at the surface, the first and second patterns being two of a point (10) a line (20) and an area (30) each having equal luminance and constant size;
    measuring the intensity of the light from the first and second patterns at the point location (12); and
    calculating a measure, indicative of the distance between the surface (11) and the location (12) according to the ratio of the measured intensity of light from the first light pattern (10,20,30) and from the second light pattern (10,20,30).

9. A method according to claim 8 wherein said point location is on an axis normal to said surface which axis passes through the centre of the light patterns, the first light pattern approximating a point source (10) of zero dimension, and the second light pattern approximating a line source (20) of one dimension, and the step of calculating provides a measure Z according to the equation:

$$\frac{R_2}{R_1} = \frac{\pi \; Y_2 \; Z}{2 \; X_1 \; Y_1} \quad \propto \; Z$$

where $X_1$, $Y_1$ are the dimensions of the first source, $Y_2$ is the smaller dimension of the second source,

$$R_1 = \frac{L \; X_1 \; Y_1}{2 \; z}, \quad R_2 = \frac{\pi \; L \; Y_2}{z^2},$$

and L is the uniform luminescence of the first and second light patterns.

10. A method according to claim 8 wherein said point location is on an axis normal to said surface which axis passes through the centre of the light patterns, the first light pattern approximating a line source (20) of one dimension and the second light pattern approximating an area source (30) of two dimensions, and the step of calculating provides a measure Z according to the equation:

$$\frac{R_3}{R_2} = \frac{2 \, Z}{Y_2} \quad \propto Z$$

where $Y_2$ is the smaller dimension of the first source

$$R_2 = \frac{\pi \, L \, Y_2}{Z_2},$$

$R_3 = \pi L$, and L is the uniform luminescence of the first and second light patterns.

**11.** A method according to claim 8 wherein said point location is on an axis normal to said surface which axis passes through the centre of the light patterns, the first light pattern approximating a point source (10) of zero dimension and the second light pattern approximating an area source (30) of two dimensions, and the step of calculating provides a measure Z according to the equation:

$$\frac{R_3}{R_1} = \frac{\pi \, Z^2}{X_1 \, Y_1} \quad \propto Z^2$$

where $X_1$, $Y_1$ are the dimensions of the first source,

$$R_1 = \frac{L \, X_1 \, Y_1}{Z^2},$$

$R_3 = \pi L$, and L is the luminescence of the said means (11).

**Patentansprüche**

1. Abstandsmeßvorrichtung, umfassend:
   Mittel (11) zum selektiven Anzeigen eines ersten (10,20,30) und zweiten (10,20,30) Lichtmusters, worin das genannte erste Lichtmuster und zweite Lichtmuster unterschiedliche zwei aus einem Punkt (10), einer Linie (20) und einer Fläche (30) sind, die jeweils eine gleiche Luminanz und konstante Größe aufweisen;
   einen Detektor (12), der im Abstand vom genannten Mittel (11) angeordnet ist und zwei Intensitätssignale als Reaktion auf empfangenes einfallendes Licht vom genannten Mittel (11) erzeugt, wobei jedes der genannten beiden Intensitätssignale einem gewählten Lichtmuster entspricht; und
   Mittel zum Berechnen eines Maßes bzw. Wertes, das anzeigend für den Abstand zwischen dem genannten Mittel (11) und dem genannten Detektor (12) gemäß dem Verhältnis der genannten Intensitätssignale ist.

2. Abstandsmeßvorrichtung nach Anspruch 1, worin der Detektor (12) entlang einer zum Mittel (11) normalen Achse angeordnet ist, die durch einen Punkt geht, an dem die Ausstrahlungsmuster (10,20) ihr Zentrum haben, wobei das genannte erste Lichtmuster sich einer Punktquelle (10) mit Nulldimension annähert, das genannte zweite Lichtmuster sich einer Linienqulle (20) mit einer Dimension annähert und das genannte Mittel zum Berechnen das Maß Z gemäß der Gleichung:

$$\frac{R_2}{R_1} = \frac{\pi \ Y_2 \ Z}{2 \ X_1 \ Y_1} \quad \propto Z$$

schafft, worin $X_1$, $Y_1$ die Abmessungen des Punktes (10), $Y_2$ die kleinere Abmessung der Linie (20) ist,

$$R_1 = \frac{L \ X_1 \ Y_1}{Z^2}$$

und

$$R_2 = \frac{\pi \ L \ Y_2}{2Z}$$

und L die gleichförmige Lumineszenz des genannten Mittels (11) ist.

3. Abstandsmeßvorrichtung nach Anspruch 1, worin der Detektor (12) entlang einer zum Mittel (11) normalen Achse angeordnet ist, die durch einen Punkt geht, in dem die Lichtmuster (20,30) ihr Zentrum haben, wobei das genannte erste Lichtmuster sich einer Lichtquelle (20) mit einer Dimension annähert und das genannte zweite Lichtmuster sich einer Flächenquelle (30) mit zwei Dimensionen annähert, und das genannte Mittel zum Berechnen das Maß Z gemäß der Gleichung:

$$\frac{R_3}{R_2} = \frac{2 \ Z}{Y_2} \quad \propto Z$$

schafft, worin $Y_2$ die kleine Abmessung der Linie (10) ist,

$$R_2 = \frac{\pi \ L \ Y_2}{2Z}$$

$R_3 = \pi \ L$ und L die gleichförmige Lumineszenz des genannten Mittels (11) ist.

4. Abstandsmeßvorrichtung nach Anspruch 1, worin der Detektor (12) entlang einer zum Mittel (11) normalen Achse angeordnet ist, die durch einen Punkt geht, an dem die Lichtmuster (10,30) ihr Zentrum haben, wobei das genannte erste Lichtmuster sich einer Punktquelle (10) mit Nulldimension annähert und das genannte zweite Lichtmuster sich einer Flächenquelle (30) mit zwei Dimensionen annähert, und das genannte Mittel zum Berechnen das Maß Z gemäß der Gleichung:

$$\frac{R_3}{R_1} = \frac{\pi\, Z^2}{X_1\, Y_1} \propto Z^2$$

schafft, worin $X_1$, $Y_1$ die Abmessungen des Punktes (10) sind,

$$R_1 = \frac{L\, X_1\, Y_1}{Z^2},$$

$R_3 = \pi\, L$, und L die Lumineszenz des genannten Mittels (11) ist.

5. Abstandsmeßvorrichtung nach einem der vorhergehenden Ansprüche, worin das genannte Licht eines aus Infrarot-, sichtbarem oder Ultraviolett-Licht ist.

6. Abstandsmeßvorrichtung nach einem der vorhergehenden Ansprüche, worin das genannte Mittel (11) ein CRT (Kathodenstrahlröhren-)-Anzeigesystem umfaßt.

7. Abstandsmeßvorrichtung nach einem der vorhergehenden Ansprüche, worin das genannte Mittel zum Berechnen Mittel zum Kompensieren der Winkel-Versetzung des genannten Detektors (12) und genannten Mittels (11) einschließt, und wobei das genannte Mittel zum Kompensieren gemäß der Gleichung:

$$dE = \frac{L\, ds_1\, \cos\, \theta_1,\, \cos\, \theta_2}{r2}$$

arbeitet, worin L die Lumineszenz des die Lichtmuster anzeigenden Mittels (11) ist, $ds_1$ ein Element der Anzeigenoberfläche ist, r der Abstand zwischen dem Detektor (12) und dem Mittel (11) ist und $\theta_1$ und $\theta_2$ die Winkel zwischen dem Detektor (12) und dem Mittel (11) und einer sie verbindenden Linie sind.

8. Verfahren zum Messen des Abstands zwischen einem Lichtmuster auf einer Oberfläche (11) und einer Punktposition (12), die im Abstand vom Muster angeordnet ist, folgende Schritte umfassend:
das Anzeigen eines ersten und zweiten Lichtmusters an der Oberfläche, wobei das erste und das zweite Muster zwei aus einem Punkt (10), einer Linie (20) und einer Fläche (30) sind, die jeweils gleiche Luminanz und konstante Größe aufweisen;
das Messen der Intensität des Lichts vom ersten und zweiten Muster an der Punktposition (12); und
das Berechnen eines Maßes, das anzeigend für den Abstand zwischen der Oberfläche (11) und der Position (12) gemäß dem Verhältnis der gemessenen Intensität des Lichts vom ersten Lichtmuster (10,20,30) und vom zweiten Lichtmuster (10,20,30) ist.

9. Verfahren nach Anspruch 8, worin die genannte Punktposition sich auf der zur genannten Oberfläche normalen Achse befindet, die durch das Zentrum der Lichtmuster hindurchgeht, wobei sich das erste Lichtmuster einer Punktquelle (10) mit Nulldimension annähert und sich das zweite Lichtmuster einer Linienquelle (20) mit einer Dimension annähert, und der Berechnungsschritt ein Maß Z gemäß der

Gleichung:

$$\frac{R_2}{R_1} = \frac{\pi\ Y_2\ Z}{2\ X_1\ Y_1} \propto Z$$

schafft, worin $X_1$, $Y_1$ die Abmessungen der ersten Quelle sind, $Y_2$ die kleinere Abmessung der zweiten Quelle ist,

$$R_1 = \frac{L\ X_1\ Y_1}{2\ Z}, \quad R_2 = \frac{\pi\ L\ Y_2}{Z^2},$$

und L die gleichförmige Lumineszenz des ersten und zweiten Lichtmusters ist.

10. Verfahren nach Anspruch 8, worin die genannte Punktposition sich auf einer zur genannten Oberfläche normalen Achse befindet, die durch das Zentrum der Lichtmuster geht, wobei das erste Lichtmuster sich einer Linienquelle (20) mit einer Dimension annähert und das zweite Lichtmuster sich einer Flächenquelle (30) mit zwei Dimensionen annähert, und der Berechnungsschritt ein Maß Z gemäß der Gleichung:

$$\frac{R_3}{R_2} = \frac{2\ Z}{Y_2} \propto Z$$

schafft, worin $Y_2$ die kleinere Abmessung der ersten Quelle

$$R_2 = \frac{\pi\ L\ Y_2}{Z_2},$$

$R_3 = \pi\ L$, ist und L die gleichförmige Lumineszenz des ersten und zweiten Lichtmusters ist.

11. Verfahren nach Anspruch 8, worin die genannte Punktposition sich auf einer zur genannten Oberfläche normalen Achse befindet, die durch das Zentrum der Lichtmuster geht, wobei das erste Lichtmuster sich einer Punktquelle (10) mit Nulldimension annähert und das zweite Lichtmuster sich einer Flächenquelle (30) mit zwei Dimensionen annähert, und der Berechnungsschritt ein Maß Z gemäß der Gleichung:

$$\frac{R_3}{R_1} = \frac{\pi\ Z^2}{X_1\ Y_1} \propto Z^2$$

schafft, worin $X_1$, $Y_1$ die Abmessungen der ersten Quelle sind,

$$R_1 = \frac{L\ X_1\ Y_1}{Z^2},$$

$R_3 = \pi\ L$, und L die Lumineszenz des genannten Mittels (11) ist.

**Revendications**

1. Appareil de mesure de distance comprenant :

   des moyens (11) pour afficher sélectivement un premier (10, 20, 30) et un deuxième (10, 20,3 0) motif de lumière, dans lequel lesdits premier motif de lumière et deuxième motif de lumière étant deux d'un point (10), d'une ligne (20) et d'une zone (30) présentant chacun une luminance égale et une taille constante ;

   un détecteur (12) espacé desdits premiers moyens (11) et réalisant deux signaux d'intensité en réponse à la lumière incidente reçue desdits moyens (11), chacun desdits deux signaux d'intensité correspondant à un motif de lumière choisi ; et

   de moyens pour calculer une mesure, indiquant la distance entre lesdits moyens (11) et ledit détecteur (12) conformément au rapport desdits signaux d'intensité.

2. Appareil de mesure de distance selon la revendication 1, dans lequel le détecteur (12) est positionné le long d'un axe perpendiculaire aux moyens (11), cet axe passe à travers un point auquel les motifs de radiation (10, 20) sont centrés, ledit premier motif de lumière s'approchant d'une source de point (10) de dimension zéro, ledit deuxième motif de lumière s'approchant d'une source de ligne (20) d'une dimension, et lesdits moyens de calcul réalisent la mesure Z conformément à l'équation :

$$\frac{R_2}{R_1} = \frac{\pi\ Y_2\ Z}{2\ X_1\ Y_1} \qquad \alpha\ Z$$

   dans laquelle $X_1$, $Y_1$ sont les dimensions du point (10), $Y_2$ est la dimension plus petite de la ligne (20),

$$R_1 = \frac{L\ X_1\ Y_1}{Z^2}$$

$$\text{et} \qquad R_2 = \frac{\pi\ L\ Y_2}{2Z}$$

et L est la luminescence uniforme desdits moyens (11).

3. Appareil de mesure de distance selon la revendication 1, dans lequel de détecteur (12) est positionné le long d'un axe perpendiculaire aux moyens (11), cet axe passe à travers un point auquel les motifs de lumière (20, 30) sont centrés, ledit premier motif de lumière s'approchant d'une source de ligne (20) d'une dimension et ledit deuxième motif de lumière s'approchant d'une source de zone (30) de deux dimensions, et lesdits moyens de calcul réalisent la mesure Z conformément à l'équation :

$$\frac{R_3}{R_2} = \frac{2Z}{Y_2} \qquad \alpha\, Z$$

dans laquelle $Y_2$ est la petite dimension de la ligne (10),

$$R_2 = \frac{\pi\, L\, Y_2}{2Z}$$

$R_3 = \pi\, L$, et L est la luminescence uniforme desdits moyens (11).

4. Appareil de mesure de distance selon la revendication 1, dans lequel le détecteur (12) est positionné le long d'un axe perpendiculaire aux moyens (11), cet axe passe à travers un point auquel les motifs de lumière (10, 30) sont centrés, ledit premier motif de lumière s'approchant d'une source de point (10) de dimension zéro, et ledit deuxième motif de lumière s'approchant d'une source de zone (30) de deux dimensions, et lesdits moyens de calcul réalisent la mesure Z conformément à l'équation :

$$\frac{R_3}{R_1} = \frac{\pi\, Z^2}{X_1\, Y_1} \qquad \alpha\, Z^2$$

dans laquelle $X_1$, $Y_1$ sont les dimensions du point (10),

$$R_1 = \frac{L\, X_1\, Y_1,}{Z^2}$$

$R_3 = \pi\, L$, et L est la luminescence desdits moyens (11).

5. Appareil de mesure de distance selon l'une des revendications précédentes, dans lequel ladite lumière est choisie parmi l'une des lumières infrarouge, visible ou ultraviolette.

6. Appareil de mesure de distance selon l'une des revendications précédentes, dans lequel lesdits moyens (11) comprennent un système de présentation sur écran cathodique.

7. Appareil de mesure de distance selon l'une des revendications précédentes, dans lequel lesdits moyens de calcul comprennent des moyens pour compenser un déplacement angulaire dudit détecteur (12) et desdits moyens (11), et lesdits moyens de compensation fonctionnent conformément à l'équation :

$$dE = \frac{L \, ds_1 \, \cos \Theta_1, \, \cos \Theta_2}{r^2}$$

dans laquelle L est la luminescence des moyens (11) affichant les motifs de lumière, $ds_1$ est un élément de la surface de présentation, r est la distance entre le détecteur (12) et les moyens (11) et $\theta_1$ et $\theta_2$ sont les angles entre le détecteur (12) et les moyens (11) et une ligne qui les réunit.

8. Procédé de mesure de distance entre un motif de lumière sur une surface (11) et une localisation de point (12) espacée du motif, comprenant les étapes consistant à :

afficher un premier et deuxième motifs de lumière à la surface, les premier et deuxième motifs étant deux d'un point (10), d'une ligne (20) et d'une zone (30) possédant chacun une luminance égale et une taille constante ;

mesurer l'intensité de la lumière provenant des premier et deuxième motifs à la localisation de point (12) ; et

calculer une mesure indiquant la distance entre la surface (11) et la localisation (12) conformément au rapport de l'intensité de lumière mesurée du premier motif de lumière (10, 20, 30) et du deuxième motif de lumière (10, 20, 30).

9. Procédé selon la revendication 8, dans lequel ladite localisation de point se trouve sur un axe perpendiculaire à ladite surface, cet axe passe à travers le centre des motifs de lumière, le premier motif de lumière s'approchant d'une source de point (10) de dimension zéro, et le deuxième motif de lumière s'approchant d'une source de ligne (20) d'une dimension, et l'opération de calcul fournit une mesure Z conformément à l'équation :

$$\frac{R_2}{R_1} = \frac{\pi \, Y_2 \, Z}{2 \, X_1 \, Y_1} \qquad \alpha \, Z$$

où $X_1$, $Y_1$ sont les dimensions de la première source, $Y_2$ est la dimension plus petite de la deuxième source,

$$R_1 = \frac{L \, X_1 \, Y_1}{2Z}, \, R_2 = \frac{\pi \, L \, Y_2,}{Z^2}$$

et L est la luminescence uniforme des premier et deuxième motifs de lumière.

10. Procédé selon la revendication 8 dans lequel ladite localisation de point se trouve sur un axe perpendiculaire à ladite surface, cet axe passe à travers le centre des motifs de lumière, le premier motif de lumière s'approchant d'une source de ligne (20) d'une dimension et le deuxième motif de lumière s'approchant d'une source de zone (30) de deux dimensions, et l'opération de calcul fournit une mesure Z conformément à l'équation :

$$\frac{R_3}{R_2} = \frac{2\,Z}{Y_2} \qquad \alpha\,Z$$

dans laquelle $Y_2$ est la dimension plus petite de la première source

$$R_2 = \frac{\pi\,L\,Y_2,}{Z^2}$$

$R_3 = L$, et L est la luminescence uniforme des premier et deuxième motifs de lumière.

**11.** Procédé selon la revendication 8, dans lequel ladite localisation de point se trouve sur un axe perpendiculaire à ladite surface, cet axe passe à travers le centre des motifs de lumière, le premier motif de lumière s'approchant d'une source de point (10) de dimension zéro et le deuxième motif de lumière s'approchant d'une source de zone (30) de deux dimensions, et l'opération de calcul fournit une mesure Z conformément à l'équation :

$$\frac{R_3}{R_1} = \frac{\pi\,Z^2}{X_1\,Y_1} \qquad \alpha\,z^2$$

dans laquelle $X_1$, $Y_1$ sont les dimension de la première source,

$$R_1 = \frac{L\,X_1\,Y_1,}{Z^2}$$

$R_3 = \pi\,L$, et L est la luminescence desdits moyens (11).

FIG. 1

FIG. 2

FIG. 3